# FASCICULE DE BREVET EUROPEEN

(11) **EP 0 524 081 B1**
(45) Date de publication et mention de la délivrance du brevet: **02.04.1997**
(21) Numéro de dépôt: 92402030.8
(22) Date de dépôt: 15.07.1992
(51) Int. Cl.: G06K 7/08, G07C 9/00, G08B 13/24

(54) **Système de communication entre un dispositif émetteur/récepteur interrogateur et un dispositif émetteur/récepteur répondeur**
Kommunikationssystem zwischen einer Sender-/Empfänger-Abfragevorrichtung und einer Sender-/Empfänger-Beantwortungsvorrichtung
Communication system between a emitter/receiver interrogator device and an emitter/receiver responder device

(30) Priorité: 16.07.1991 FR 9108961
(43) Date de publication de la demande: 20.01.1993
(73) Titulaire: COMMISSARIAT A L'ENERGIE ATOMIQUE, 75015 Paris (FR)
(72) Inventeur: Jeuch, Pierre, F-38180 Seyssins (FR); Le Roy, Alain, F-38240 Meylan (FR)
(74) Mandataire: Dubois-Chabert, Guy

(56) Documents cités:
- EP-A- 0 006 691
- EP-A- 0 242 906
- EP-A- 0 287 175
- WO-A-84/03566
- WO-A-86/01058
- WO-A-92/22040
- GB-A- 2 187 916
- US-A- 3 859 652
- US-A- 4 247 758
- US-A- 4 600 829

## Description

La présente invention a pour objet un système de communication utilisant une absorption d'énergie à une fréquence F. Elle trouve de nombreuses applications, notamment dans le domaine de la reconnaissance d'individus porteurs de badges ou dans le domaine de la comptabilisation et/ou du contrôle de marchandises entreposées ou mises en vente dans des magasins.

Des systèmes d'identification automatique permettent de reconnaître un objet ou un individu porteur respectivement d'une étiquette ou d'un badge munis d'un microcircuit et passant sous un portique. Ce portique émet un signal RF (radiofréquence) reconnu par l'étiquette ou le badge.

Un tel système a été décrit dans la demande de brevet publiée sous le numéro EP-A-0 387 970. Ce système est appliqué à la détection de présence, telle que celle d'une étiquette passant sous un portique. Il utilise une absorption momentanée d'énergie à une fréquence F choisie. Au passage de l'étiquette sous le portique, le mouvement relatif alors créé entre ladite étiquette et le portique génère une variation d'absorption d'énergie qui peut être détectée.

Ce système présente l'inconvénient de ne pouvoir détecter la présence d'une étiquette que par son déplacement.

Un système de communication entre des moyens interrogateurs et des moyens émetteurs est également connu, dans lequel les moyens répondeurs sont inhibés momentanément lorsque la tension d'alimentation descend en dessous d'un certain seuil et jusqu'à ce qu'elle remonte au-delà de ce seuil. Ce système est décrit dans la demande de brevet EP-A-0 242 906.

Par un dispositif adéquat, la présente invention permet de détecter la présence d'une étiquette fixe. Elle permet de plus de détecter la présence de plusieurs étiquettes et de les différencier par détection d'un code numérisé propre à chaque étiquette.

D'une façon générale, un portique émet, sur une fréquence F, des signaux d'interrogation destinés aux étiquettes ; celles-ci répondent auxdits signaux d'interrogation en absorbant une quantité d'énergie variant en fonction de son code numérisé.

Durant toute la description, on utilisera indifféremment les termes d'étiquette, de badge ou de moyens E/R (émetteurs/récepteurs) répondeurs. De même, on comprendra par "portique", des moyens E/R (émetteurs/récepteurs) interrogateurs. De plus, durant cette description, on entendra par "inhibition", le passage de l'étiquette dans un mode silencieux, c'est-à-dire où l'étiquette ne réagit plus.

De façon plus précise, l'invention concerne un système de communication comprenant un dispositif E/R, émetteur/récepteur, interrogateur et un dispositif E/R répondeur dans lequel :
- le dispositif E/R interrogateur comprend des moyens pour émettre des informations codées par modulation d'un signal à une fréquence F et des moyens pour détecter des variations d'absorption d'énergie ; et
- le dispositif E/R répondeur comprend au moins une antenne d'émission/réception ainsi que des moyens de réception desdites informations codées, connectés à ladite antenne d'émission/réception, des moyens de mémorisation dans lesquels est stocké un code numérisé, un circuit de contrôle et de séquencement connecté aux moyens de réception et auxdits moyens de mémorisation, des moyens d'absorption d'énergie à la fréquence F permettant de donner des réponses au dispositif E/R interrogateur, et des moyens d'inhibition pour inhiber momentanément ces réponses lorsqu'un bit desdites informations codées émises par le dispositif E/R interrogateur diffère du bit dudit code numérisé et des moyens d'inhibition (26b) pour inhiber définitivement ces réponses lorsque ledit code numérisé a été transféré au dispositif E/R interrogateur, lesdits moyens d'absorption d'énergie ainsi que lesdits moyens d'inhibition étant commandés par le circuit de contrôle et de séquencement et connectés audit circuit de contrôle et de séquencement.

Avantageusement, le dispositif E/R répondeur comprend des moyens pour s'alimenter en énergie à partir de l'énergie absorbée du signal émis à la fréquence F par le dispositif E/R interrogateur.

Selon une caractéristique de l'invention, les moyens pour inhiber la réponse du dispositif E/R répondeur comprennent au moins deux bascules connectées audit circuit de contrôle et de séquencement, une première bascule assurant une inhibition momentanée et une seconde bascule assurant une inibition définitive.

Selon une autre caractéristique, les moyens pour absorber de l'énergie à une fréquence F comportent une capacité branchée en parallèle sur l'antenne, et un interrupteur connecté, d'une part, au circuit de contrôle et de séquencement et, d'autre part, à ladite capacité. Cet interrupteur assure, par un état ouvert, la mise en service momentanée desdits moyens d'absorption.

D'après l'invention, le circuit de contrôle et de séquencement, relié aux moyens de mémorisation, est apte à gérer la quantité d'énergie à absorber en fonction du code numérisé contenu dans lesdits moyens de mémorisation.

De façon avantageuse, le dispositif E/R répondeur comporte deux antennes, une première antenne d'émission et une seconde antenne de réception, toutes deux accordées sur la fréquence F.

Selon un premier mode de réalisation, le dispositif E/R répondeur est réalisé par un microcircuit susceptible d'équiper des marchandises entreposées et/ou mises en vente dans un magasin.

Selon un second mode de réalisation, le dispositif E/R répondeur est réalisé par un microcircuit placé sur une carte support pour l'identification d'individus porteurs de ladite carte.

On prendra à titre d'exemple et pour décrire l'invention, l'application au cas de marchandises munies d'étiquettes et regroupées dans un caddie que le client passe sous un portique de détection.

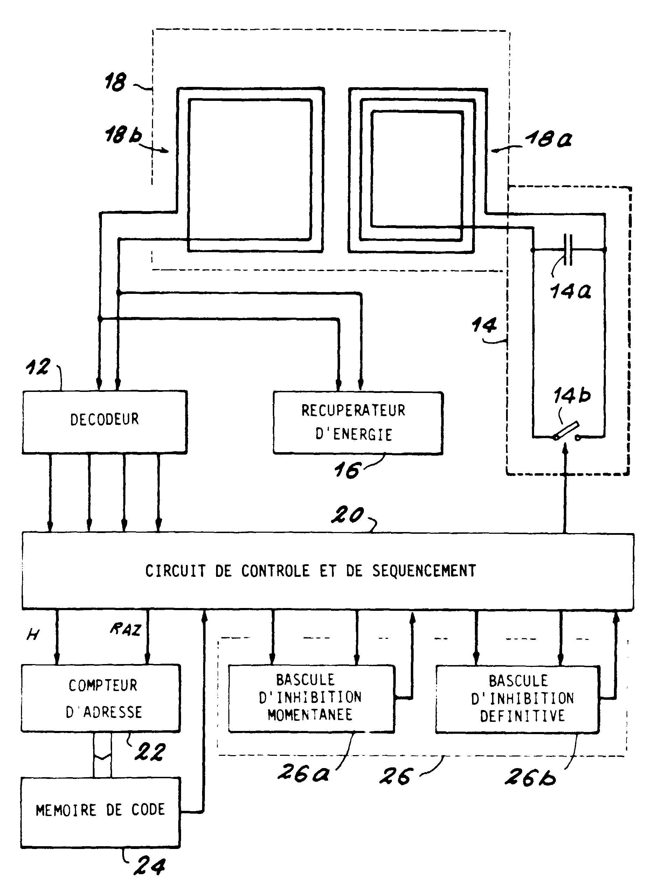

La description qui va suivre, donnée à titre illustratif et non limitatif, se réfère au dessin annexé qui représente schématiquement le circuit électronique d'une étiquette selon l'invention.

Le circuit électronique selon l'invention comprend notamment un système 12 de réception de signaux RF en provenance du portique (non représenté sur la figure), un système 14 d'absorption d'énergie permettant de répondre au portique, un système 16 pour récupérer de l'énergie en provenance du portique et une antenne 18 d'émission/réception.

Dans le mode de réalisation représenté sur la figure, le dispositif, selon l'invention, comprend deux antennes : une antenne d'émission 18a et une antenne de réception 18b, toutes deux accordées sur la fréquence F.

L'antenne de réception 18b est connectée au système 16 pour récupérer de l'énergie en provenance du portique. Le signal ainsi récupéré est redressé, filtré et régulé par ledit système 16 pour récupérer l'énergie, assurant alors l'alimentation en tension de l'ensemble du circuit électronique de l'étiquette.

L'antenne de réception 18b est connectée également aux moyens de réception des informations codées.

Selon le mode de réalisation décrit de l'invention, ces moyens de réception sont un décodeur permettant de décoder les informations reçues du portique avant de les envoyer à un circuit 20 de contrôle et de séquencement, lui-même relié aux moyens de mémorisation comportant le compteur d'adresse 22 de la mémoire de code 24.

Le circuit 20 de contrôle et de séquencement gère les informations reçues et les informations à émettre. Lorsque le circuit 20 reçoit une information, sous forme de question, en provenance du portique, il interroge la mémoire de code 24, par l'intermédiaire du compteur d'adresse 22, pour connaître la valeur du bit de code en cours de traitement. En effet, le compteur d'adresse 22, connecté au circuit 20 de contrôle et de séquencement par une connexion H "horloge" de commande d'avance dudit compteur 22 et par une connexion RAZ de remise à zéro dudit compteur 22, pointe le bit de code en cours de traitement. Ainsi, lorsque le circuit 20 a pris connaissance de la valeur dudit bit de code, il choisit la réponse à envoyer et commande son émission au système 14.

Un mode de réalisation consiste à détecter simplement la présence d'étiquettes.

Dans le mode de réalisation correspondant à l'application décrite, on cherche également à différencier les différentes étiquettes, en déterminant leur code numérisé.

Pour cette réalisation, le circuit 20 de contrôle et de séquencement est connecté à deux bascules 26 d'inhibition : une première bascule 26a permet l'inhibition momentanée de l'étiquette jusqu'à la fin de la recherche du code en cours lorsque le bit de code en cours de traitement diffère du bit de code pointé dans la mémoire de code 24 et une seconde bascule 26b permet l'inhibition définitive de l'étiquette lorsque le code numérisé a été retrouvé et transféré au portique.

Une telle réalisation est décrite dans la demande de brevet WO-A-9 222 040 et citée conformément à l'article 54(3) de la CBE.

Le système d'absorption d'énergie 14 comporte un interrupteur 14b et une capacité 14a en parallèle sur une bobine (antenne 18a) formant le secondaire d'un transformateur dont le primaire est constitué par une antenne de réception du portique.

L'interrupteur 14b reliant les deux bornes de la capacité 14a est commandé par le circuit 20 de contrôle et de séquencement qui choisit le signal de réponse que doit envoyer le système 14 d'absorption d'énergie au portique. Le circuit absorbe momentanément de l'énergie lorsque l'interrupteur 14b est ouvert. Cette variation d'absorption est détectée, à son arrivée sur le portique, par une mesure de variation de la phase du courant circulant dans l'antenne.

L'application aux étiquettes supportées par les articles d'un magasin, telle qu'elle a été décrite précédemment, peut être appliquée de façon plus précise à la facturation. Elle n'est cependant pas la seule application possible pour le dispositif selon l'invention. D'autres applications, telles que le contrôle d'identité d'individus, sont envisageables.

## Revendications

1. Système de communication comprenant un dispositif E/R, émetteur/récepteur, interrogateur et un dispositif E/R répondeur dans lequel :
- le dispositif E/R interrogateur comprend des moyens pour émettre des informations codées par modulation d'un signal à une fréquence F et des moyens pour détecter des variations d'absorption d'énergie ; et
- le dispositif E/R répondeur comprend au moins une antenne (18) d'émission/réception ainsi que des moyens (12) de réception desdites informations codées, connectés à ladite antenne d'émission/réception, des moyens de mémorisation (22, 24) dans lesquels est stocké un code numérisé, un circuit (20) de contrôle et de séquencement connecté aux moyens de réception et auxdits moyens de mémorisation, des moyens (14) d'absorption d'énergie à la fréquence F permettant de donner des réponses au dispositif E/R interrogateur, et des moyens (26a) d'inhibition pour inhiber momentanément ces réponses lorsqu'un bit desdites informations codées émises par le dispositif E/R interrogateur diffère du bit dudit code numérisé et des moyens d'inhibition (26b) pour inhiber définitivement ces réponses lorsque ledit code numérisé a été transféré au dispositif E/R interrogateur, lesdits moyens d'absorption d'énergie ainsi que lesdits moyens d'inhibition étant commandés par le circuit de contrôle et de séquencement et connectés audit circuit de contrôle et de séquencement.

2. Système selon la revendication 1, caractérisé en ce que le dispositif E/R répondeur comprend des moyens (16) pour s'alimenter en énergie à partir de l'énergie absorbée du signal émis à la fréquence F par le dispositif E/R interrogateur.

3. Système selon la revendication 1 ou 2, caractérisé en ce que les moyens pour inhiber la réponse du dispositif E/R répondeur comprennent au moins deux bascules connectées audit circuit de contrôle et de séquencement, une première bascule (26a) assurant l'inhibition momentanée et une seconde bascule (26b) assurant l'inhibition définitive.

4. Système selon l'une quelconque des revendications 1 à 3, caractérisé en ce que les moyens pour absorber de l'énergie à une fréquence F comportent une capacité (14a) branchée en parallèle sur l'antenne, et un interrupteur (14b) connecté, d'une part, au circuit de contrôle et de séquencement et, d'autre part, à ladite capacité.

5. Système selon l'une quelconque des revendications 1 à 4, caractérisé en ce que le circuit de contrôle et de séquencement, relié aux moyens de mémorisation, est apte à gérer la quantité d'énergie à absorber en fonction du code numérisé contenu dans lesdits moyens de mémorisation.

6. Système selon l'une quelconque des revendications 1 à 5, caractérisé en ce que le dispositif E/R répondeur comporte deux antennes, une première antenne d'émission (18a) et une seconde antenne (18b) de réception, toutes deux accordées sur la fréquence F.

7. Système selon l'une quelconque des revendications 1 à 6, caractérisé en ce que le dispositif E/R répondeur est réalisé par un microcircuit susceptible d'équiper des marchandises entreposées et/ou mises en vente dans un magasin.

8. Système selon l'une quelconque des revendications 1 à 6, caractérisé en ce que le dispositif E/R répondeur est réalisé par un microcircuit placé sur une carte support pour l'identification d'individus porteurs de ladite carte.

## Patentansprüche

1. Kommunikationssystem, eine Sender-/Empfänger- oder S/E-Abfragevorrichtung und eine Sender-/Empfänger- oder S/E-Beantwortungsvorrichtung umfassend, wobei in diesem System:
- die S/E-Abfragevorrichtung Einrichtungen umfaßt, um Informationen zu senden, codiert durch Modulation eines Signals mit einer Frequenz F, und Einrichtungen, um Energieabsorptionsveränderungen zu detektieren; und
- die S/E-Beantwortungsvorrichtung wenigstens eine Sender-/Empfänger-Antenne (18) und Empfängervorrichtungen (12) der genannten codierten Informationen umfaßt, die mit besagter Sender-/Empfänger-Antenne verbunden sind, sowie Speichereinrichtungen (22, 24), in denen ein digitalisierter Code abgespeichert ist, eine Kontroll- und Ablaufsteuerungsschaltung (20), deren Eingang mit den Empfängervorrichtungen und deren Ausgang mit besagten Speichereinrichtungen verbunden ist, Einrichtungen (14) zur Absorption von Energie mit der Frequenz F, die ermöglichen, der S/E-Abfragevorrichtung Antworten zu liefern, und Sperreinrichtungen (26a), um diese Antworten momentan zu sperren, wenn ein Bit der besagten, durch die S/E-Abfragevorrichtungen gesendeten codierten Informationen abweicht vom Bit des genannten gespeicherten digitalisierten Codes, und Sperreinrichtungen (26b), um diese Antworten definitiv zu sperren, wenn besagter digitalisierter Code an die S/E-Abfragevorrichtung übertragen worden ist, wobei besagte Energieabsorptionseinrichtungen sowie besagte Sperreinrichtungen gesteuert werden durch die genannte Kontroll- und Ablaufsteuerungsschaltung und jeweils mit dem Ausgang und mit dem Eingang verbunden sind mit dieser Kontroll- und Ablaufsteuerungsschaltung.

2. System nach Anspruch 1, dadurch gekennzeichnet, daß die S/E-Beantwortungsvorrichtung Einrichtungen (16) umfaßt, um sich mit Energie aus der absorbierten Energie des Signals zu versorgen, das durch die S/E-Abfragevorrichtung mit der Frequenz F gesendet wird.

3. System nach Anspruch 1, dadurch gekennzeichnet, daß die Einrichtungen zum Sperren der Antwort der S/E-Beantwortungsvorrichtung wenigstens zwei Kippschaltungen umfaßt, verbunden mit der genannten Kontroll- und Ablaufsteuerungsschaltung, wobei eine erste Kippschaltung (26a) die momentane Sperrung sichert und eine zweite Kippschaltung (26b) die definitive Sperrung sichert.

4. System nach einem der Ansprüche 1 bis 3, dadurch gekennzeichnet, daß die Einrichtungen zum Absorbieren von Energie mit einer Frequenz F eine zur Antenne parallelgeschaltete Kapazität (14a) umfassen und einen Schalter (14b), einerseits mit der Kontroll- und Ablaufsteuerungsschaltung verbunden und andrerseits mit besagter Kapazität.

5. System nach einem der Ansprüche 1 bis 4, dadurch gekennzeichnet, daß die Kontroll- und Ablaufsteuerungsschaltung, verbunden mit den Speichereinrichtungen, imstande ist, die zu absorbierende Energiemenge in Abhängigkeit von dem digitalisierten Code zu erzeugen, der in besagten Speichereinrichtungen enthalten ist.

6. System nach einem der Ansprüche 1 bis 5, dadurch gekennzeichnet, daß die S/E-Beantwortungsvorrichtung zwei Antennen umfaßt, eine erste Antenne zum Senden (18a) und eine zweite Antenne zum Empfangen (18b), alle beide abgestimmt auf die Frequenz F.

7. System nach einem der Ansprüche 1 bis 6, dadurch gekennzeichnet, daß die S/E-Beantwortungsvorrichtung realisiert wird durch einen Mikroschaltkreis, geeignet zum Bestücken von Waren, die zwischengelagert oder in einem Kaufhaus zum Verkauf angeboten werden.

8. System nach einem der Ansprüche 1 bis 6, dadurch gekennzeichnet, daß die S/E-Beantwortungsvorrichtung realisiert wird durch einen Mikroschaltkreis, angebracht auf einer Trägerkarte zur Identifikation von Personen, die Träger bzw. Inhaber diese Karte sind.

## Claims

1. Communications system comprising a send/receive (S/R) unit, a S/R interrogating unit and an S/R answering unit, wherein:
- the S/R interrogating unit comprises means for sending coded informations by the modulation of a signal at a frequency F and means for detecting energy absorption variations and
- the answering S/R unit comprises at least one transmission/reception antenna (18), as well as means (12) for receiving said coded informations, connected to said transmission/reception antenna, storage means (22, 24) in which are stored a digitized code, a checking and sequencing circuit (20) connected at the input to the reception means and at the output to said storage means, energy absorption means (14) at the frequency F making it possible to give answers to the S/R interrogating unit, and inhibiting means (26a) for instantaneously inhibiting these answers when a bit of said coded informations emitted by the S/R interrogation unit differs from the bit of the stored code and inhibiting means (26b) for definitively inhibiting the said answers when said digitized code has been transferred to the S/R interrogating unit, said energy absorption means and said inhibiting means being controlled by the checking and sequencing circuit and respectively connected at the output and input of said checking and sequencing circuit.

2. System according to claim 1, characterized in that the answering S/R unit comprises means (16) which can be supplied with energy from the absorbed energy of the signal emitted at the frequency F by the interrogating S/R unit.

3. System according to claim 1 or 2, characterized in that means for inhibiting the answer of the answering S/R unit incorporate at least two flip-flops connected to the checking and sequencing circuit, a first flip-flop (26a) ensuring the instantaneous inhibition and the second flip-flop (26b) the definitive inhibition.

4. System according to any one of the claims 1 to 3, characterized in that the means for absorbing the energy at a frequency F incorporate a capacitor (14a) connected in parallel to the antenna and a switch (14b) connected on the one hand to the checking and sequencing circuit and on the other to the said capacitor.

5. System according to any one of the claims 1 to 4, characterized in that the checking and sequencing circuit connected to the storage means is able to control the energy quantity to be absorbed as a function of the digitized code contained in said storage means.

6. System according to any one of the claims 1 to 5, characterized in that the answering S/R unit has two antennas, a first transmission antenna (18a) and a second reception antenna (18b), both tuned to the frequency F.

7. System according to any one of the claims 1 to 6, characterized in that the answering S/R unit is formed by a microcircuit for equipping goods stored and/or placed on sale in a shop.

8. System according to any one of the claims 1 to 6, characterized in that the answering S/R unit is formed by a microcircuit placed on a support card for the identification of persons wearing said card.
